Europäisches Patentamt

(19) European Patent Office

Office européen des brevets

(11) Publication number: **0 132 444**
**B1**

## (12) EUROPEAN PATENT SPECIFICATION

(45) Date of publication of patent specification: **20.11.86**

(51) Int. Cl.⁴: **A 23 L 1/236**

(21) Application number: **83106881.2**

(22) Date of filing: **13.07.83**

(54) **Sweetening composition and process for modifying the sweetness perception of a foodstuff.**

(43) Date of publication of application:
**13.02.85 Bulletin 85/07**

(45) Publication of the grant of the patent:
**20.11.86 Bulletin 86/47**

(84) Designated Contracting States:
**AT BE DE GB LU NL SE**

(56) References cited:

**None**

(73) Proprietor: **GENERAL FOODS CORPORATION**
**250 North Street**
**White Plains, N.Y. 10625 (US)**

(72) Inventor: **Barnett, Ronald Edward**
**73 East Maple Avenue**
**Suffern, N.Y. (US)**
Inventor: **Yarger, Ronald Gilbert**
**8 Boulevard, Apt. 2**
**Suffern, N.Y. (US)**

(74) Representative: **Brauns, Hans-Adolf, Dr. rer. nat.**
**et al**
**Hoffmann, Eitle & Partner, Patentanwälte**
**Arabellastrasse 4**
**D-8000 Munich 81 (DE)**

Courier Press, Leamington Spa, England.

**Description**

This invention relates generally to sweetness modification and more particularly to low-caloric compounds, particularly well suited as sweetness modifiers in edible foodstuffs.

Sweetness is one of the primary taste cravings of both animals and humans. Thus, the utilization of sweetening agents in foods in order to satisfy this sensory desire is well established.

Naturally occurring carbohydrate sweeteners, such as sucrose, are still the most widely used sweetening agents. While these naturally occurring carbohydrates, i.e. sugars, generally fulfill the requirements of sweet taste, the abundant usage thereof does not occur without deleterious consequences, e.g. high caloric input. In fact, often times the level of these sweeteners required to satisfy taste in foodstuffs is far higher than that level of sweetener which is desired for economic, dietetic or other functional considerations.

In an attempt to eliminate the disadvantages concomitant with natural sweeteners, considerable research and expense have been devoted to the production of artificial sweeteners, such as for example, saccharin, cyclamate, dihydrochalcone, aspartame, etc. While some of these artificial sweeteners satisfy the requirements of sweet taste without caloric input and have met with considerable commercial success, they are not, however, without their own inherent disadvantage. For example, many of these artificial sweeteners have the disadvantages of high cost of production, as well as delay in perception of the sweet taste, persistent lingering of the sweet taste, and very objectionable bitter, metallic after-taste when used in food products.

Since it is believed that many of the disadvantages of artificial sweeteners, particularly aftertaste, are a function of the concentration of the sweetener, it has been previously suggested that these effects could be reduced or eliminated by combining artificial sweeteners, such as saccharin, with other ingredients or natural sugars, such as pectin, sorbitol, dextrose, maltose, etc. These combined products, however, have not been entirely satisfactory either. Some U.S. patents which disclose sweetener mixtures include, for example, U.S. Patent No. 4,228,198, U.S. Patent No. 4,158,068, U.S. Patent No. 4,154,862, and U.S. Patent No. 3,717,477.

More particularly U.S. Patent No. 4,228,198 discloses a sweetening composition comprised of a protein sweetener, saccharin or cyclamate in combination with a sweetness modifier, namely arabinogalactan. The patentee states that the arabinogalactan enhances the overall sweetness of the composition and reduces or eliminates the after taste.

U.S. Patent No. 4,158,068 discloses a sweetener mixture having an improved saccharose-like taste consisting of acetosulfame and at least one sweetener from the group of aspartyl peptide esters, the sulfamate sweeteners, the sulfimide sweeteners and dihydrochalcone sweeteners.

Mixtures of artificial sweeteners, such as saccharin and the like, and neodiosmin are disclosed in U.S. Patent No. 4,154,862, to be of reduced bitterness and after taste, while U.S. Patent No. 3,717,477 discloses that the sweetening potency and taste of the sodium saccharin are improved by the addition of small amounts of optically active D-tryptophan.

Other references disclose certain organic compounds to be sweet. Belitz et al, Sweet and Bitter Compounds: Structure and Taste Relationship, *Food Taste Chemistry*, ACS Symposium Series 115, Edited by James C. Boudreau, pp 93, 114—115 (1979) disclose m-hydroxybenzoic acid to have a threshold sweetness concentration of 5—7 millimoles/liter. This reference does not disclose or suggest that this compound would be an excellent foodstuff sweetener when employed in combination with sweetening amounts of known natural and/or artificial sweeteners.

Furthermore, it is well known that enormous quantities of sweeteners are utilized in beverages, particularly commercial soft drinks and dessert products, for example, gelatins. Since many of these beverages and desserts have an acidic pH, not only must the sweetener employed therein be acid stable, but it also must be effective under acid pH conditions. In the case of sweeteners such as sucrose and saccharin, it is known that sweetening potency is generally decreased in acidic systems. Thus, in these acidic products such as, for example, carbonated beverages, etc., it is necessary to utilize relatively large quantities of these sweeteners to achieve the desired level of sweetness. These large quantities of sweetener are often times far higher than the level of sweetener desired for economic, nutritional or other functional considerations.

Accordingly, in view of the aforementioned disadvantages associated with the use of known sweeteners, i.e., naturally occurring, artificial or combinations thereof, it becomes readily apparent that it would be highly desirable to provide a sweetness modifying agent which when added to foodstuffs can greatly reduce the level of deleterious sweetener normally required and concomitantly eliminate or greatly diminish the numerous disadvantages associated with the prior art sweeteners.

The present invention provides a foodstuff composition comprising a foodstuff, a food acceptable sweetener in sweetening amounts and a food acceptable, non-toxic amount of a sweetness modifying agent selected from m-hydroxybenzoic acid and/or non-toxic salts thereof.

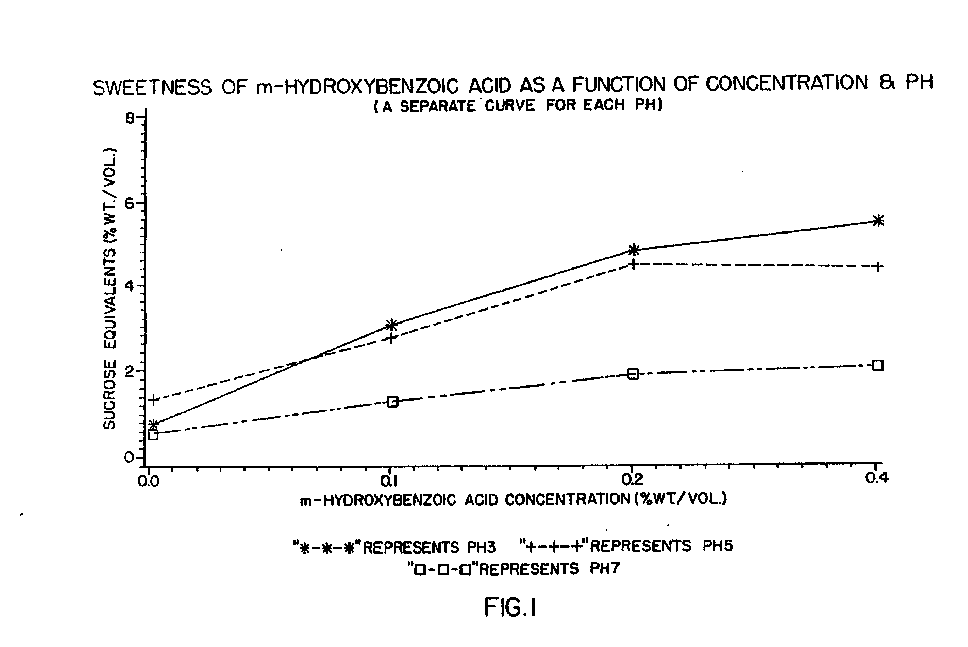

In the accompanying drawings Fig. 1 is a graphical representation plotting the sweetness of m-hydroxybenzoic acid, in comparison to sucrose, as a function of concentration at varied levels of pH.

Fig. 2 is a graphical representation plotting the sweetness of sucrose as a function of concentration at varied levels of pH, in comparison to itself.

Fig. 3 is a further graphical representation plotting the sweetness of mixtures of m-hydroxybenzoic acid and sucrose, in comparison to sucrose, as a function of concentration at varied pH levels.

In accordance with the present invention, it has been discovered that m-hydroxybenzoic acid (also known as 3-hydroxybenzoic acid), when used in combination with a natural carbohydrate or synthetic sweetener in a foodstuff, permits a significant reduction in the amount of natural and/or synthetic sweetener ordinarily necessary to achieve the usually desired level of sweetness in the foodstuff. For example, it has been surprisingly found that when m-hydroxybenzoic acid is used in foodstuffs, even in relatively small quantities, 50% or more of the usually required sweetener, such as sucrose, can be eliminated from the foodstuff, while still achieving the same desired level of sweetness perception.

Thus, according to the present invention, it has been unexpectedly found that m-hydroxybenzoic acid and/or its food acceptable, non-toxic salts are effective sweetness modifying agents when used in combination with sweetening amounts of known natural and/or artificial sweeteners, including for example, sucrose, fructose, corn syrup solids, dextrose, xylitol, sorbitol, mannitol, acesulfam, thaumatin, invert sugar, L sugars, saccharin, cyclamate, dihydrochalcones, aspartame (L - aspartyl - L - phenylalanine methyl ester) and other dipeptides, glycerrhizin, stevioside, chorosucrose mixtures thereof and the like.

Moreover, to achieve the desired result of the present invention, the utilization of only small quantities of m-hydroxybenzoic acid or its non-toxic salts are necessary. That is, for example, depending on the particular foodstuff and sweetener, the m-hydroxybenzoic acid is generally added to the foodstuff in sweetness modifying amounts. These amounts are generally in the range of from about 0.01 to about 0.4 weight percent, based on the consumed weight of the foodstuff. Preferably, the amount of m-hydroxybenzoic acid is utilized in amounts of from about 0.05 to about 0.3 weight percent and most preferably only from about 0.08 to about 0.2 weight percent, based on the consumed weight of the foodstuff. It has been observed herein that the quality of the foodstuff is best when the m-hydroxybenzoic acid is employed in amounts below about 0.3 wt.%. It is understood that these afore-described amounts of m-hydroxybenzoic acid are based on the consumed weight of the foodstuff. Thus, the amounts employed in a product, for example, a dry beverage mix, prior to taking its consumed form by the addition of diluents or solvents such as water, will necessarily vary accordingly in the preconsumed form of the foodstuff. That is, for example, in a pre-mix foodstuff comprising m-hydroxybenzoic acid or its salts, the m-hydroxybenzoic acid or its salts are present in an amount sufficient such that when a diluent is added to the pre-mix foodstuff, the m-hydroxybenzoic acid or its salts are present in the diluted foodstuff in an amount, for example in the range of from about 0.01 to about 0.4% by weight of the diluted foodstuff. By diluent or solvent herein, solid or liquid additives such as water, carbonated water, milk, alcohol, eggs, food-acceptable sweeteners as hereinbefore defined and the like are contemplated. Pre-mix foodstuffs contemplated herein include, for example, dry mix and liquid foodstuffs and concentrates such as for example, instant dry mix flavored beverages, instant dry mix gelatins and puddings, cake mixes, liquid beverage concentrates and the like. Furthermore, these afore-described sweetness modifying amounts are based on the free acid, namely m-hydroxybenzoic acid. Thus, in the event salts of this acid are utilized the amount of the salt employed in the foodstuff should be at least sufficient to provide the afore-described amounts of the acid.

Typical, foodstuffs, including pharmaceutical preparations, in which the m-hydroxybenzoic acid or salts thereof of the present invention may be used as a sweetness modifier are, for example, beverages, including soft drinks, carbonated beverages, ready-to-mix beverages and the like, infused foods (e.g. fruits or vegetables), sauces, condiments, salad dressings, juices, syrups, desserts, including puddings, gelatin and frozen desserts, like ice creams, sherbets and icings, confections, chewing gum, intermediate moisture foods (e.g. dog foods), toothpaste, mouthwashes and the like.

As indicated hereinbefore, it is especially preferred to utilize the m-hydroxybenzoic acid in foodstuff compositions having an acidic pH. Unlike other sweeteners, such as sucrose and saccharin, it has been found that m-hydroxybenzoic acid is most effective as a sweetness modifier in acidic foodstuff compositions. Thus, foodstuff compositions having a pH in the range of 1 to below 7 are especially contemplated herein. Foodstuff compositions having an acidic pH below about 6.6 are preferred, while foodstuff compositions having a pH in the range of from 2.0 to 5.5 are most preferred. Typical acidic foodstuffs include beverages including carbonated beverages, tea, coffee, juices, gelatin, cakes, puddings, jams, jellies, berries, salad dressings, vegetables (e.g. carrots, spinach, sweet potatoes), tomatoes, sauces, soup with tomatoes, yoghurt, cereals and confectionary (candy, gum, etc.).

Furthermore, as stated hereinbefore, the unexpected results of the present invention are provided when the sweetness modifying agent, namely m-hydroxybenzoic acid or its non-toxic salts, is employed in combination with a sweetener, such as those hereinbefore recited, in sweetening amounts. It is, of course, understood that when a mixture of sweeteners is utilized, it is not necessary that each sweetener be present in sweetening amounts provided that the sweetener mixture results in a sweetening amount.

Thus, for the purposes of this invention, best results are obtained when the m-hydroxybenzoic acid is employed in a foodstuff in combination with a sweetener, wherein the sweetener is present in amounts of above about 2 wt.% of sucrose equivalents. Preferably the sweetener content is in the range of from about 2 wt.% to about 25 wt.% sucrose equivalents and most preferably 4 wt.% to about 15 wt.% sucrose equivalents. Thus, wherein the sweetener is, for example, saccharin, the amounts of saccharin which correspond to the afore-recited sucrose equivalents are above about 0.007, preferably from about 0.007 to about 0.08 wt.%, and most preferably from about 0.013 to about 0.05 wt.%. These values for aspartame are from about 0.013, preferably about 0.013 to about 0.17, and most preferably about 0.03 to about 0.1. Sucrose equivalents for other known sweeteners are readily known or are easily determined. For example, the amount of a sweetener which is equivalent to 10 wt.% sucrose can be determined by having a panel taste a solution of sweetener and match its sweetness to a 10 wt.% solution of sucrose. Obviously, sucrose equivalents for other than 10 wt.% sucrose are determined by matching the appropriate sucrose solutions.

For purposes herein the combination of sweetness modifier and sweetener should provide a total foodstuff sweetness of above about 4 wt.%, preferably from about 4 wt.% to about 40 wt.%, and most preferably from about 6 wt.% to about 16 wt.% sucrose equivalents.

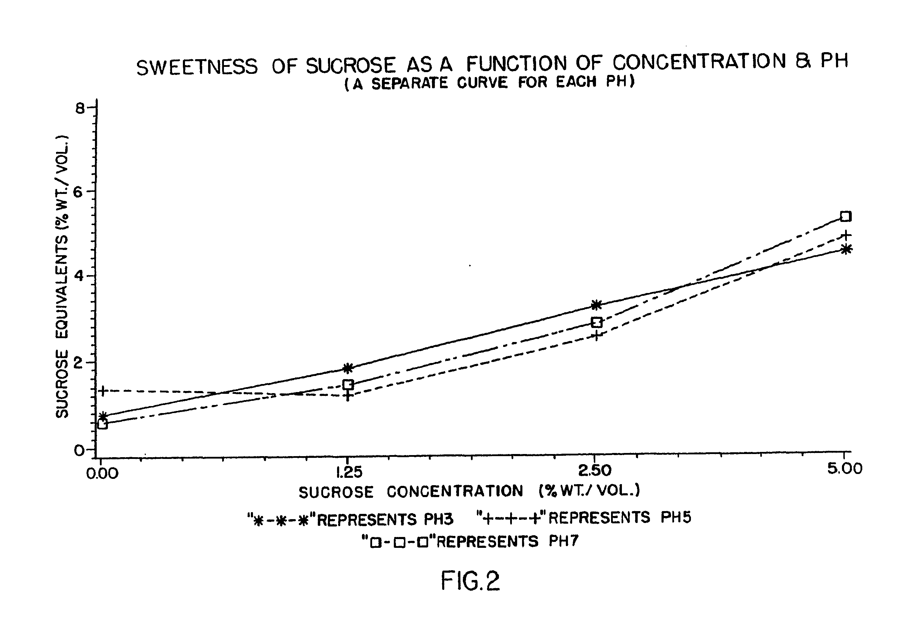

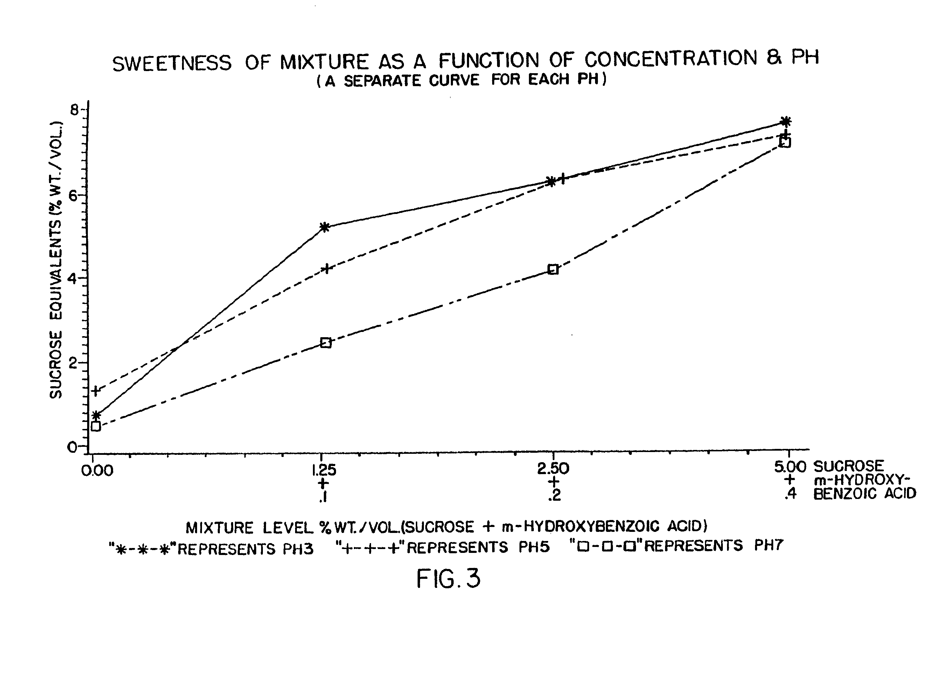

Referring to the drawings herein in more detail, Figs. 1—3 graphically illustrate the surprising results of the present invention. That is, Fig. 1 is a plot of the sweetness of aqueous m-hydroxybenzoic acid solutions in comparison to aqueous sucrose solutions (pH of the sucrose solutions adjusted to the pH of the m-hydroxybenzoic acid solutions) as the function of concentration at various pH levels. Fig. 2 is a similar plot for sucrose comparing it to itself as a control. Fig. 1 shows that unlike sucrose, m-hydroxybenzoic acid exhibits higher potency in an acidic environment. For example, at pH 3 or 5 and at a concentration of 0.1 wt.%, m-hydroxybenzoic acid provides a sucrose equivalency of more than twice that of which it provides at pH 7 at the same concentration. Furthermore, Fig. 3 illustrates that an aqueous solution, for example, containing a mixture of 0.1 wt.% m-hydroxybenzoic acid and 1.25 wt.% sucrose at pH 7 has the equivalent sweetness of about 2.2 wt.% sucrose, while the same mixture of m-hydroxybenzoic acid and sucrose at pH 3 has a sucrose equivalency of about 5.2 wt.% and at pH 5 of about 4.2 wt.%. These data clearly show that m-hydroxybenzoic acid has a surprisingly greater sweetness potency in an acidic environment.

In addition, the highly advantageous results of the present invention are further evidenced by a comparison of Figs. 2 and 3. That is, Fig. 3 shows, for example, that at pH levels of 3 and 5, a mixture, for instance of 0.1% m-hydroxybenzoic acid and 1.25% sucrose solution is sweeter than a solution containing 2.50% sucrose as the sole sweetener, as illustrated by Fig. 2. Thus, it is readily apparent from this data that the utilization of m-hydroxybenzoic acid in foodstuffs allows for a significant reduction in the amounts of caloric and expensive sweetener, such as sucrose, ordinarily required, yet still achieving the desired level of sweetness in the foodstuff. Similar results are obtained when m-hydroxybenzoic acid is used in combination with an other sweetener such as aspartame.

In summary, the data in Figs. 1 to 3 show, inter alia, that m-hydroxybenzoic acid is equivalent in sweetness to larger amounts of sucrose in pH 3 and 5 solutions than in pH 7 solutions. Moreover, the data further illustrate that on average, m-hydroxybenzoic can replace approximately three times more sucrose in pH 3 or 5 solutions than in pH 7 solutions.

Briefly, the data illustrated by Figs. 1 to 3 were obtained by preparing aqueous solutions of m-hydroxybenzoic acid (0.1, 0.2, 0.4%), sucrose (1.25, 2.50, 5.00) and mixtures of m-hydroxybenzoic acid and sucrose (0.1 and 1.25; 0.2 and 2.50; 0.4 and 5.00%, respectively) at pH levels of 3, 5 and 7. The pH of each of the solutions was adjusted and maintained by the addition of conventional acids and/or bases, such as HCl or NaOH, and/or buffering agents such as citric acid and potassium citrate. The solutions were matched for sweetness to 1 of 14 sucrose solutions ranging in concentration from 0 to 13% in 1% increments. Each of the 18 subjects participated in 3 test sessions, one for each of the pH conditions. Within a session, all test solutions and sucrose standards were at the same pH, either 3, 5, or 7. All testing used a sip and spit procedure and was done double-blind. The data were analyzed by an analysis of variance.

The m-hydroxybenzoic acid of the present invention can be readily prepared according to well known synthetic procedures or can be obtained commercially, (e.g. from Pfaltz and Bauer). For purposes of optimization, it has been found advantageous to utilize about a 99% pure material. A simple procedure for obtaining a material of this purity is, for example, to add the m-hydroxybenzoic acid, with stirring, to boiling distilled water. When no solid material remains visible, granulated charcoal (food approved) is added to the solution and the mixture is stirred further. The resultant mixture is then hot filtered and slowly recrystallized at, for example, about 45—50°F. The resultant m-hydroxybenzoic acid has a purity of about 99%.

Furthermore, as stated hereinbefore, food acceptable, non-toxic salts of m-hydroxybenzoic acid are also contemplated herein. These salts include carboxylate salts as well as phenolate salts. Carboxylate and/or phenolate salts include, sodium, potassium, calcium, magnesium, ammonium and the like and may be preformed or formed in-situ in the foodstuff by reaction with typical buffering agents, such as sodium citrate, potassium citrate, sodium acetate, calcium phosphate, such as monocalcium phosphate and tricalcium phosphate, and the like which are also normally employed in foodstuffs to provide the desired pH.

Sweetening compositions comprised of m-hydroxybenzoic acid or its salts and a sweetener, such as sucrose, saccharin, aspartame (or mixtures) and the like are also contemplated herein. These sweetening compositions may be preformed, formulated and packaged, for example, so that they can be readily added to a foodstuff to provide the hereinbeforenoted advantages. Moreover, these sweetening compositions may be added to foodstuffs which do not contain sweetener as well as to foodstuffs containing sweetener.

In order that those skilled in the art may better understand how the present invention may be practiced, the following examples are given by way of illustration and not by way of limitation.

Example 1

As a control, a cherry flavored beverage is prepared by mixing 2.36 gms of a cherry flavor instant beverage base mix with 930 gms of water and 106 gms (10.6 wt.%) sucrose. The base contains citric acid (2.03 gms). The final aqueous mixture has a pH of about 2.6.

For comparative purposes, a further cherry flavored beverage is prepared by mixing 957 gms of water, 2.36 gms of the same unsweetened base mix as in the control and 63.4 gms sucrose (6.3 wt.%, which is 60% of the sucrose utilized in the control). The formulation has a pH of about 2.6.

For further comparison, another cherry flavoured beverage is prepared by mixing 956 gms of water, 2.36 gms of the same unsweetened base mix, 63.4 gms sucrose (6.3 wt.%, 60% of the sucrose in the control) and 1.0 gms (0.1 wt.%) of purified m-hydroxybenzoic acid. This formulation has a pH of about 2.6.

For additional comparison, a further cherry flavored beverage is prepared by mixing 956 gms of water, 2.06 gms of the unsweetened base mix, 63.4 gms of sucrose (6.3 wt.% 60% of the sucrose in the control) and 1.0 gms (0.1 wt.%) purified m-hydroxybenzoic acid. In this formulation the citric acid in the unsweetened base is reduced to 1.73 gms (15% reduction) which is advantageously compensated for by the addition of the m-hydroxybenzoic acid. The pH of this formulation is about 2.6.

In evaluating and comparing the sweetness of the afore-described cherry flavored beverage compositions, tasters assessed the sweetness of the beverages containing the 0.1 wt.% m-hydroxybenzoic acid and 60% of the sucrose used in the control to be as sweet as the 100% sucrose control composition as well as having acceptable quality. The same tasters assessed the 60% sucrose containing beverage with no m-hydroxybenzoic acid to be unacceptable.

For further comparison another cherry flavored beverage is prepared by mixing 946 gms of water, 2.36 gms of the same unsweetened base mix, 79 gms sucrose (7.9 wt.%, 75% of sucrose in the control) and 0.5 gms (0.05 wt.%) of purified m-hydroxybenzoic acid. This formulation has a pH of about 2.6.

For additional comparison, a further cherry flavored beverage is prepared by mixing 968 gms of water, 2.36 gms of the same unsweetened base, 42 gms sucrose (4.2 wt.%, 40% of the sucrose in the control), and 2.0 gms (0.2 wt.%) purified m-hydroxybenzoic acid. The pH of this formulation is about 2.6.

In evaluating and comparing the sweetness of the afore-described cherry flavored beverage compositions, tasters assessed the sweetness of the beverages containing the 0.05 wt.% and 0.2 wt.% m-hydroxybenzoic acid and reduced sucrose to be as sweet as the 100% sucrose control composition as well as having acceptable quality.

Example 2

As a control, an orange flavored beverage is prepared by mixing 12.67 gms Tang™ instant beverage base mix with 913.3 gms of water and 122.6 gms (12.26 wt.%) sucrose. The Tang™ base contains citric acid (7.1 gms) and potassium citrate (0.7 gms) buffer. The final aqueous mixture has a pH of about 3.0.

For further comparison, another orange flavored beverage is prepared by mixing 950 gms of water, 12.67 gms of the same unsweetened Tang™ base mix, 61.31 gms sucrose (6.13 wt.%, 50% of the sucrose in the control) and 0.8 gms (0.08 wt.%) of purified m-hydroxybenzoic acid. This formulation has a pH of about 2.9.

For additional comparison, a further orange flavored beverage is prepared by mixing 953.0 gms of water, 11.4 gms unsweetened Tang™ base, 61.3 gms sucrose (6.13 wt.% 50% of the sucrose in the control) and 0.8 gms (0.08 wt.%) purified m-hydroxybenzoic acid. In this formulation the citric acid in the unsweetened base is reduced to 5.80 gms (18% reduction) which is advantageously compensated for by the addition of the m-hydroxybenzoic acid. The pH of this formulation is about 2.9.

In evaluating and comparing the sweetness of the afore-described orange flavored beverage compositions, tasters assessed the sweetness of the beverages containing the 0.08 wt.% m-hydroxybenzoic acid and 50% of the sucrose used in the control to be as sweet as the 100% sucrose control composition as well as having acceptable quality.

Example 3

As a control, a mixed fruit gelatin is prepared by mixing 474.0 gms of an unsweetened gelatin base mix with 47.40 gms of water and 0.3737 gms (0.077 wt.%) APM. The gelatin base contains an adipic acid and disodium phosphate buffer. The final gelatin has a pH of about 3.9.

For comparative purposes, a further mixed fruit gelatin is prepared by mixing 474.0 gms of water, 10.31 gms of the same unsweetened gelatin base mix as in the control, 0.1868 gms APM (0.038 wt.%, which is 50% of the APM used in the control) and 0.387 gms (0.08 wt.%) purified m-hydroxybenzoic acid. The final gelatin has a pH of about 3.8.

In evaluating and comparing the sweetness of the afore-described gelatin compositions, tasters assessed the sweetness of the gelatins containing the m-hydroxybenzoic acid and reduced APM to be as sweet as the 100% APM control composition as well as having acceptable quality.

Example 4

As a control, a vanilla flavored pudding is prepared by mixing 21.6 gms vanilla instant pudding base mix with 474 gms of milk and 90.0 gms (15.4 wt.%) sucrose. The pudding base contains 1.35 gms of sodium acid pyrophosphate resulting in a pudding formulation having a pH of about 6.5.

For comparative purposes, a further vanilla flavored pudding is prepared by mixing 474 gms of milk, 21.6 gms of the same unsweetened pudding base mix as in the control, 58.8 gms sucrose (10.55 wt.%, which is 65% of the sucrose utilized in the control). The formulation has a pH of about 6.5.

For further comparison another vanilla flavored pudding is prepared by mixing 409 gms of milk, 65 gms $H_2O$, 21.6 gms of the same unsweetened pudding base mix, 58.5 gms sucrose (10.55 wt.%, 65% of the sucrose in the control) and 0.444 gms (0.08 wt.%) of purified m-hydroxybenzoic acid. This formulation has a pH of about 6.33.

In evaluating and comparing the sweetness of the afore-described vanilla flavored pudding compositions, tasters assessed the sweetness of the pudding containing 0.08 wt.% of m-hydroxybenzoic acid and 65% sucrose of the control to be as sweet as the 100% sucrose control composition as well as having acceptable quality. The vanilla flavored pudding composition containing 65% sucrose of the control composition and no m-hydroxybenzoic acid was not acceptable.

Example 5

As a control, an angel food cake is prepared by baking an angel food cake batter containing 37 wt.% sucrose (pH about 5.4).

For comparative purposes, an angel food cake is prepared by baking the same angel food cake batter containing 27.0 wt.% sucrose (which 60% of the sucrose used in the control) and 0.1 wt.% m-hydroxybenzoic acid (pH about 5.24).

In evaluating and comparing the sweetness of the afore-described angel food cakes, tasters assessed the sweetness of the cake containing the m-hydroxybenzoic acid and reduced sucrose to be as sweet as the 100% sucrose control cake as well as having acceptable quality.

Example 6

As a control, ready-to-drink cola containing about 0.035 wt.% saccharin is prepared by mixing 0.097 gms saccharin, 47.365 gms water, 1.27 gms cola concentrate and 226.27 gms salt free club soda. The final cola has a pH of about 2.6.

For comparative purposes, a further ready-to-drink cola beverage is prepared by admixing 47.365 gms water, 0.0388 gms saccharin (0.0141 wt.% saccharin, 40% of the control), 1.27 gms cola concentrate 0.10 wt.% m-hydroxybenzoic acid and 226.27 gms salt free club soda. This cola has a pH of about 2.6.

In evaluating and comparing the sweetness of the afore-described cola beverages, tasters assessed the sweetness of the beverage containing the m-hydroxybenzoic acid and reduced saccharin to be as sweet as the 100% saccharin control as well as having acceptable quality.

Example 7

As a control, a punch flavored beverage is prepared by mixing 4.97 gms undiluted punch beverage base mix with 993.1 gms of water and 0.38 gms (0.038 wt.%) APM. The punch mix contains a citric acid, potassium citrate, and tricalcium phosphate buffer. The final aqueous mixture has a pH of about 3.3.

For comparative purposes, a further punch flavored beverage is prepared by mixing 992.7 gms of water, 4.97 gms of the same unsweetened base mix as in the control and 0.19 gms APM (0.019 wt.%, which is 50% of the APM utilized in the control). The formulation has a pH of about 3.3.

For further comparison, another punch flavored beverage is prepared by mixing 992.7 gms of water, 4.97 gms of the same unsweetened base mix, 0.19 gms APM (0.019 wt.%, 50% of the APM in the control) and 0.8 gms (0.08 wt.%) of purified m-hydroxybenzoic acid. This formulation has a pH of about 3.29.

In evaluating and comparing the sweetness of the afore-described punch flavored beverage compositions, tasters assessed the sweetness of the beverages containing the 0.08 wt.% m-hydroxybenzoic acid and 50% of the APM used in the control to be as sweet as the 100% APM control composition as well as having acceptable quality. The same tasters assessed the 50% APM containing beverage with no m-hydroxybenzoic acid to be unacceptable.

Example 8

As a control, a mixed cherry gelatin is prepared by mixing 9.194 gms of an unsweetened gelatin base mix with 474.0 gms of water and 0.14 gms (0.029 wt.%) saccharin. The gelatin base contains an adipic fumaric acid and potassium citrate buffer. The final gelatin has a pH of about 3.89.

For further comparison, another mixed cherry gelatin is prepared by mixing 474.0 gms of water, 9.194 of the same unsweetened gelatin base mix, 0.07 gms saccharin 0.0145 wt.%, 50% of the saccharin in the control) and 0.24 gm (0.08 wt.%) of purified m-hydroxybenzoic acid. This formulation has a pH of about 3.85.

In evaluating and comparing the sweetness of the afore-described gelatin compositions, tasters assessed the sweetness of the gelatins containing the m-hydroxybenzoic acid and reduced saccharin to be as sweet as the 100% saccharin control composition as well as having acceptable quality.

Obviously, other modifications and variations of the present invention are possible in the light of the above teachings. It is, therefore, to be understood that changes may be made in the particular embodiments of this invention which are within the full intended scope of the invention as defined by the appended claims.

## Claims

1. A foodstuff composition comprising a food-acceptable sweetener in sweetening amounts and a sweetness modifying agent selected from m-hydroxybenzoic acid and/or food-acceptable, non-toxic salts thereof, wherein said sweetness modifying agent is present in a food-acceptable sweetness modifying amount.

2. The foodstuff composition of Claim 1 wherein said foodstuff has an acidic pH.

3. The foodstuff composition of Claim 1 or 2 wherein said sweetness modifying agent is m-hydroxybenzoic acid.

4. The foodstuff composition of Claims 1, 2 or 3 wherein said food-acceptable sweetener is selected from sucrose, fructose, corn syrup solids, dextrose, xylitol, sorbitol, mannitol, acesulfam, thaumatin, invert sugar, L sugars, saccharin, cyclamate, dihydrochalcone, aspartame, stevioside, glycyrrhizin or mixtures thereof.

5. The foodstuff composition of Claim 1, 2, 3 or 4 wherein said food-acceptable sweetener is aspartame.

6. The foodstuff composition of any of Claims 1 to 5 wherein said sweetener is present in said foodstuff in amounts above about 2 wt.% of sucrose equivalents.

7. The foodstuff composition of any of Claims 1 to 3 wherein said foodstuff is a flavored beverage having an acidic pH and said sweetness modifying agent is present in an amount of from about 0.08 to about 0.3% by weight of the foodstuff composition.

8. A process for modifying the sweetness perception of a foodstuff, said process comprising adding to a foodstuff, a food-acceptable sweetness modifying amount of a sweetness modifying agent selected from m-hydroxybenzoic acid and/or food-acceptable, non-toxic salts thereof, said foodstuff comprising a food-acceptable sweetener in sweetening amounts.

9. The process of Claim 8 wherein said foodstuff has an acidic pH.

10. The process of Claims 8 or 9 wherein said food-acceptable sweetener is selected from sucrose, fructose, corn syrup solids, dextrose, xylitol, sorbitol, mannitol, acesulfam, thaumatin, invert sugar, saccharin, cyclamate, dihydrochalcone, aspartame, stevioside, glycyrrhizin or mixtures thereof.

11. The process of Claims 8, 9 or 10 wherein said sweetener is present in said foodstuff in amounts above about 2 wt.% of sucrose equivalents.

12. The process of Claim 8 wherein said food-acceptable sweetener is present in an amount from about 4 wt.% to about 15 wt.% of sucrose equivalents.

13. The process of any of Claims 8 to 12 wherein said foodstuff is a flavored beverage having an acidic pH and said sweetness modifying agent is present in an amount of from about 0.05 to about 0.3% by weight of said flavored beverage.

14. The sweetening composition to be added to a foodstuff, said sweetening composition comprising a food-acceptable sweetener and a sweetness modifying agent selected from m-hydroxybenzoic acid and/or food-acceptable, non-toxic salts thereof, wherein said sweetness modifying agent is present in said sweetening composition in an amount sufficient such that when said sweetening composition is added to a foodstuff said sweetness modifying agent is present in said foodstuff in an amount from about 0.01 to about 0.4 percent by weight of the foodstuff.

15. The sweetening composition of Claim 14 wherein said sweetness modifying agent is m-hydroxybenzoic acid.

16. The sweetening composition of Claim 14 or 15 wherein said food-acceptable sweetener is selected from sucrose, fructose, corn syrup solids, dextrose, xylitol, sorbitol, mannitol, acesulfam, thaumatin, invert sugar, saccharin, cyclamate, dihydrochalcone, aspartame, stevioside, glycyrrhizin or mixtures thereof.

17. A pre-mix foodstuff comprising a foodstuff, a food-acceptable sweetener in sweetening amounts and a sweetness modifying agent selected from m-hydroxybenzoic acid, food-acceptable and/or non-toxic salts thereof, wherein said sweetness modifying agent is present in said pre-mix foodstuff in an amount sufficient such that when a diluent is added to said pre-mix foodstuff said sweetness modifying agent is present in the diluted foodstuff in an amount from about 0.01 to about 0.4% by weight of the diluted foodstuff.

18. The pre-mix foodstuff of Claim 17 wherein said sweetness modifying agent is m-hydroxybenzoic acid.

19. The pre-mix foodstuff of Claim 17 or 18 wherein said diluent is water.

20. The pre-mix foodstuff of any of Claims 17 to 19 wherein the diluent includes the food-acceptable sweetener in sweetening amounts.

## Patentansprüche

1. Nahrungsmittel-Zusammensetzung, umfassend ein für in Nahrungsmitteln annehmbares Süssungsmittel in einer süssenden Menge und ein Süssemodifizierungsmittel, ausgewählt aus m-Hydroxybenzoesäure und/oder nahrungsmittelannehmbaren nicht-toxischen Salzen davon, worin das Süssemodifizierungsmittel in

einer nahrungsmittelannehmbaren süssemodifizierenden Menge vorliegt.

2. Nahrungsmittel-Zusammensetzung gemäss Anspruch 1, worin das Nahrungsmittel einen sauren pH-Wert hat.

3. Nahrungsmittel-Zusammensetzung gemäss Anspruch 1 oder 2, worin das Süssemodifizierungsmittel m-Hydroxybenzoesäure ist.

4. Nahrungsmittel-Zusammensetzung gemäss Ansprüchen 1, 2 oder 3, worin das nahrungsmittelannehmbare Süssungsmittel ausgewählt ist aus Saccharose, Fructose, Maissirup-Feststoffen, Dextrose, Xylit, Sorbit, Mannit, Acesulfam, Thaumatin, Invertzucker, L-Zucker, Saccharin, Cyclamat, Dihydrochalcon, Aspartam, Steviosid, Glycyrrhizin oder Mischungen davon.

5. Nährungsmittel-Zusammensetzung gemäss Anspruch 1, 2, 3 oder 4, worin das nahrungsmittelannehmbare Süssungsmittel Aspartam ist.

6. Nahrungsmittel-Zusammensetzung gemäss einem der Ansprüche 1 bis 5, worin das Süssungsmittel in dem Nahrungsmittel in Mengen oberhalb etwa 2 Gew.% Saccharoseäquivalenten vorliegt.

7. Nahrungsmittel-Zusammensetzung gemäss einem der Ansprüche 1 bis 3, worin das Nahrungsmittel ein mit einem Geschmack versehenes Getränk mit einem sauren pH ist und das Süssemodifizierungsmittel in einer Menge von etwa 0,08 bis etwa 0,3 Gew.% der Nahrungsmittel-Zusammensetzung vorliegt.

8. Verfahren zum Modifizieren der Süsse-Wahrnehmung in einem Nahrungsmittel, wobei das Verfahren die Zugabe einer nahrungsmittelannehmbaren süssemodifizierenden Menge eines Süssemodifizierungsmittels zu einem Nahrungsmittel umfasst und das Süssemodifizierungsmittel aus m-Hydroxybenzoesäure und/oder nahrungsmittelannehmbaren, nicht-toxischen Salzen davon ausgewählt ist und wobei das Nahrungsmittel ein nahrungsmittelannehmbares Süssungsmittel in einer süssenden Menge enthält.

9. Verfahren gemäss Anspruch 8, worin das Nahrungsmittel einen sauren pH hat.

10. Verfahren gemäss Ansprüchen 8 oder 9, worin das nahrungsmittelannehmbare Süssungsmittel ausgewählt ist aus Saccharose, Fructose, Maissirup-Feststoffen, Dextrose, Xylit, Sorbit, Mannit, Acesulfam, Thaumatin, Invertzucker, Saccharin, Cyclamat, Dihydrochalcon, Aspartam, Steviosid, Glycyrrhizin oder Mischungen davon.

11. Verfahren gemäss Ansprüchen 8, 9 oder 10, worin das Süssungsmittel in dem Nahrungsmittel in einer Menge oberhalb 2 Gew.% Saccharoseäquivalenten vorliegt.

12. Verfahren gemäss Anspruch 8, worin das nahrungsmittelannehmbare Süssungsmittel in einer Menge von etwa 4 bis etwa 15 Gew.% Saccharoseäquivalenten vorliegt.

13. Verfahren gemäss einem der Ansprüche 8 bis 12, worin das Nahrungsmittel ein mit Geschmack versehenes Getränk mit einem sauren pH-Wert ist und das Süssemodifizierungsmittel in einer Menge von etwa 0,05 bis etwa 0,3 Gew.%

des mit Geschmack versehenen Getränkes vorliegt.

14. Einem Nahrungsmittel zuzugebende Süssungszusammensetzung, wobei die Süssungszusammensetzung ein nahrungsmittel-annehmbares Süssungsmittel und ein süsse-modifizierendes Mittel, ausgewählt aus m-Hydroxybenzoesäure und/oder nahrungsmittelannehmbaren, nicht-toxischen Salzen davon, umfasst, worin das Süssemodifizierungsmittel in der Süssungsmittel-Zusammensetzung in einer Menge vorliegt, die ausreicht, dass dann, wenn man die Süssungsmittel-Zusammensetzung zu einem Nahrungsmittel gibt, das Süssemodifizierungsmittel in dem Nahrungsmittel in einer Menge von etwa 0,01 bis etwa 0,4 Gew.% des Nahrungsmittels vorliegt.

15. Süssungsmittel-Zusammensetzung gemäss Anspruch 14, worin das Süssemodifizierungsmittel m-Hydroxybenzoesäure ist.

16. Süssungsmittel-Zusammensetzung gemäss Anspruch 14 oder 15, worin das nahrungsmittelannehmbare Süssungsmittel ausgewählt ist aus Saccharose, Fructose, Maissirup-Feststoffen, Dextrose, Xylit, Sorbit, Mannit, Acesulfam, Thaumatin, Invertzucker, Saccharin, Cyclamat, Dihydrochalcon, Aspartam, Steviosid, Glycyrrhizin oder Mischungen davon.

17. Ein vorgemischtes Nahrungsmittel, umfassend ein Nahrungsmittel, ein nahrungsmittelannehmbares Süssungsmittel in einer süssenden Menge und ein Süssemodifizierungsmittel, ausgewählt aus m-Hydroxybenzoesäure, nahrungsmittelannehmbaren und/oder nicht-toxischen Salzen davon, worin das Süssemodifizierungsmittel in dem vorgemischten Nahrungsmittel in einer Menge vorliegt, die ausreicht, dass dann, wenn man ein Verdünnungsmittel zu dem vorgemischten Nahrungsmittel zugibt, das Süssemodifizierungsmittel in dem verdünnten Nahrungsmittel in einer Menge von etwa 0,01 bis etwa 0,4 Gew.% des verdünnten Nahrungsmittels vorliegt.

18. Vorgemischtes Nahrungsmittel gemäss Anspruch 17, worin das Süssemodifizierungsmittel m-Hydroxybenzoesäure ist.

19. Vorgemischtes Nahrungsmittel gemäss Anspruch 17 oder 18, worin das Verdünnungsmittel Wasser ist.

20. Vorgemischtes Nahrungsmittel gemäss einem der Ansprüche 17 bis 19, worin das Verdünnungsmittel das nahrungsmittelannehmbare Süssungsmittel in einer süssenden Menge einschliesst.

**Revendications**

1. Composition alimentaire comprenant un édulcorant acceptable dans l'alimentation en quantités édulcorantes et un agent modifiant le goût sucré choisi parmi l'acide m-hydroxybenzoïque et/ou ses sels non toxiques acceptables dans l'alimentation, dans laquelle ledit agent modifiant le goût sucré est présent en une quantité modifiant le goût sucré, acceptable dans l'alimentation.

2. Composition alimentaire selon la revendication 1, dans laquelle ledit produit alimentaire a un pH acide.

3. Composition alimentaire selon la revendication 1 ou 2 dans laquelle ledit agent modifiant le goût sucré est l'acide m-hydroxybenzoïque.

4. Composition alimentaire selon les revendications 1, 2 ou 3 dans laquelle ledit édulcorant acceptable dans l'alimentation est choisi parmi le saccharose, le fructose, les solides de liqueur de trempage de maïs, le dextrose, le xylitol, le sorbitol, le mannitol, l'acésulfame, la thaumatine, le sucre inverti, les sucres L, la saccharine, le cyclamate, la dihydrochalcone, l'aspartame, le stévioside, la glycyrrhizine ou leurs mélanges.

5. Composition alimentaire selon la revendication 1, 2, 3 ou 4 dans laquelle ledit édulcorant acceptable dans l'alimentation est l'aspartame.

6. Composition alimentaire selon l'une quelconque des revendications 1 à 5 dans laquelle ledit édulcorant est présent dans ledit produit alimentaire en quantités de plus d'environ 2% en poids d'équivalents de saccharose.

7. Composition alimentaire selon l'une quelconque des revendications 1 à 3, dans laquelle ledit produit alimentaire est une boisson aromatisée ayant un pH acide et ledit agent modifiant le goût sucré est présent en quantité d'environ 0,08 à environ 0,3% en poids de la composition alimentaire.

8. Procédé pour modifier la perception du goût sucré d'un produit alimentaire, ledit procédé comprenant l'addition à un produit alimentaire d'une quantité modifiant le goût sucré, acceptable dans l'alimentation, d'un agent modifiant le goût sucré choisi parmi l'acide m-hydroxybenzoïque et/ou ses sels non toxiques acceptables dans l'alimentation, ledit produit alimentaire comprenant un édulcorant acceptable dans l'alimentation en quantités édulcorantes.

9. Procédé selon la revendication 8 dans lequel ledit produit alimentaire a un pH acide.

10. Procédé selon les revendications 8 ou 9 dans lequel ledit édulcorant acceptable dans l'alimentation est choisi parmi le saccharose, le fructose, les solides de liqueur de trempage de maïs, le dextrose, le xylitol, le sorbitol, le mannitol, l'acésulfame, la thaumatine, le sucre inverti, la saccharine, le cyclamate, la dihydrochalcone, l'aspartame, le stévioside, la glycyrrhizine ou leurs mélanges.

11. Procédé selon les revendications 8, 9 ou 10 dans lequel ledit édulcorant est présent dans ledit produit alimentaire en quantités de plus d'environ 2% en poids d'équivalents de saccharose.

12. Procédé selon la revendication 8, dans lequel ledit édulcorant acceptable dans l'alimentation est présent en quantités d'environ 4 à environ 15% en poids d'équivalents de saccharose.

13. Procédé selon l'une quelconque des revendications 8 à 12, dans lequel ledit produit alimentaire est une boisson aromatisée ayant un pH acide et ledit agent modifiant le goût sucré est présent en quantité d'environ 0,08 à environ 0,3% en poids de la composition alimentaire.

14. Composition édulcorante à ajouter à un produit alimentaire, ladite composition édulcorante comprenant un édulcorant acceptable dans l'alimentation et un agent modifiant le goût sucré choisi parmi l'acide m-hydroxybenzoïque et/ou ses sels non toxiques acceptables dans l'alimentation, dans laquelle ledit agent modifiant le goût sucré est présent dans ladite composition édulcorante en quantité suffisante pour que, lorsque ladite composition édulcorante est ajoutée à un produit alimentaire, ledit agent modifiant le goût sucré soit présent dans ledit produit alimentaire en quantité d'environ 0,01 à environ 0,4% en poids du produit alimentaire.

15. Composition édulcorante selon la revendication 14, dans laquelle ledit agent modifiant le goût sucré est l'acide m-hydroxybenzoïque.

16. Composition édulcorante selon la revendication 14 ou 15 dans laquelle ledit édulcorant acceptable dans l'alimentation est choisi parmi le saccharose, le fructose, les solides de liqueur de trempage de maïs, le dextrose, le xylitol, le sorbitol, le mannitol, l'acésulfame, la thaumatine, le sucre inverti, la saccharine, le cyclamate, la dihydrochalcone, l'aspartame, le stévioside, la glycyrrhizine ou leurs mélanges.

17. Prémélange alimentaire comprenant un produit alimentaire, un édulcorant acceptable dans l'alimentation en quantités édulcorantes et un agent modifiant le goût sucré choisi parmi l'acide m-hydroxybenzoïque et/ou ses sels non toxiques acceptables dans lequel ledit agent modifiant le goût sucré est présent dans ledit prémélange alimentaire en quantité suffisante pour que, lorsque l'on ajoute un diluant audit prémélange alimentaire, ledit agent modifiant le goût sucré soit présent dans le produit alimentaire dilué en quantité d'environ 0,01 à environ 0,4% en poids du produit alimentaire dilué.

18. Prémélange alimentaire selon la revendication 17, dans lequel ledit agent modifiant le goût sucré est l'acide m-hydroxybenzoïque.

19. Prémélange alimentaire selon la revendication 17 ou 18, dans lequel ledit diluant est l'eau.

20. Prémélange alimentaire selon l'une quelconque des revendications 17 à 19, dans lequel le diluant contient l'édulcorant acceptable dans l'alimentation en quantités édulcorantes.

SWEETNESS OF m-HYDROXYBENZOIC ACID AS A FUNCTION OF CONCENTRATION & PH
(A SEPARATE CURVE FOR EACH PH)

"*-*-*" REPRESENTS PH3   "+-+-+" REPRESENTS PH5
"□-□-□" REPRESENTS PH7

FIG.I

0 132 444

SWEETNESS OF SUCROSE AS A FUNCTION OF CONCENTRATION & PH
(A SEPARATE CURVE FOR EACH PH)

"*-*-*"REPRESENTS PH3    "+-+-+"REPRESENTS PH5
"□-□-□"REPRESENTS PH7

FIG.2

SWEETNESS OF MIXTURE AS A FUNCTION OF CONCENTRATION & PH
(A SEPARATE CURVE FOR EACH PH)

FIG. 3